# EUROPEAN PATENT APPLICATION

(11) **EP 3 796 240 A1**
(43) Date of publication of application: **24.03.2021**
(21) Application number: 20196847.6
(22) Date of filing: 18.09.2020
(51) Int. Cl.: G06Q 10/06, G06Q 10/10

(54) **INTELLIGENT FORMS PLATFORM FOR MODELING WORKFLOW FORMS**

(30) Priority: 19.09.2019 US 201916575736
(71) Applicant: SAP SE, 69190 Walldorf (DE)
(72) Inventor: Day, Rouven, 69190 Walldorf (DE)
(74) Representative: Müller-Boré & Partner Patentanwälte PartG mbB

(57) **Abstract**

Methods, systems, and computer-readable storage media for receiving, by a software system, a workflow model that defines a workflow executed by the software system, the workflow model provided as a file prior to execution of the workflow and including a control flow, during execution of the workflow by the software system, providing a first portion of a workflow form based on the control flow, the workflow form corresponding to a first activity of the workflow and the first portion including one or more interface elements enabling a user to provide user input to the software system during execution of the workflow to progress the workflow within the software system, displaying the workflow form to the user as a user interface including the first portion, and receiving, by the software system, user input that is provided through an interface element of the one or more interface elements of the first portion.

## Description

### BACKGROUND

Enterprises use software systems to conduct operations. Example software systems can include, without limitation, enterprise resource management (ERP) systems, customer relationship management (CRM) systems, human capital management (HCM) systems, and the like. In some software systems, processes that underly operations of an enterprise are programmatically defined to enable execution of the processes using the software systems. A workflow is a set of technologies and tools that enable documents, information, activities and tasks to flow appropriately in enterprise or a department of an enterprise.

To enable user participation in software-based workflows, user interfaces (UIs) or forms need to be provided. To achieve this, software applications are provided that enable forms to be modeled for user tasks using so-called workflow forms. However, such modeling of forms requires manual effort and consumes computing resources (e.g., resources required to manually model the forms). For example, during design-time, each detail of the workflow form has to be pre-planned, modelled, and configured accordingly. For example, fields of the workflow form, which can each include sections and sub-sections, must be modeled and bound to context data, types for the fields have to be selected, and, for each field, it has to be decided whether it is read-only or editable, and decisions (e.g. Approve or Reject) have to be modeled. Accordingly, modeling workflow forms is a repetitive and tedious task for users and consumes computing resources.

### SUMMARY

Implementations of the present disclosure are directed to an intelligent workflow forms platform for modeling workflow forms for execution of workflows in software systems. More particularly, and as described in further detail herein, the intelligent workflow forms platform of the present disclosure leverages an existing workflow model, which models an executing workflow, to provide at least a portion of a workflow form that is used during execution of the workflow. In some implementations, an existing workflow form is used to provide at least a portion of another workflow form, both workflow forms being used during execution of the workflow. In some implementations, data context is used to provide at least a portion of a workflow form, the data context being provided from a preceding task that is executed during execution of the workflow.

In some implementations, actions include receiving, by a software system, a workflow model that defines a workflow executed by the software system, the workflow model provided as a computer-readable file prior to execution of the workflow and comprising a control flow, during execution of the workflow by the software system, providing a first portion of a workflow form based on the control flow, the workflow form corresponding to a first activity of the workflow and the first portion including one or more interface elements enabling a user to provide user input to the software system during execution of the workflow to progress the workflow within the software system, displaying the workflow form to the user as a user interface including the first portion, and receiving, by the software system, user input that is provided through an interface element of the one or more interface elements of the first portion. Other implementations of this aspect include corresponding systems, apparatus, and computer programs, configured to perform the actions of the methods, encoded on computer storage devices.

These and other implementations can each optionally include one or more of the following features: the control flow defines one or more decisions executable by the user during execution of the workflow; each of the one or more interface elements is selectable by the user to execute a decision defined within the workflow model for progressing the workflow within the software system; actions further include, during execution of the workflow by the software system, providing a second portion of the workflow form based on a data context provided from execution of a second activity of the workflow, the user interface including the second portion; the data context includes property and value pairs input to a previous workflow form during performance of the second activity; actions further include during execution of the workflow by the software system, providing a second portion of the workflow form based on a previous workflow form provided for a second activity of the workflow, the user interface including the second portion; and actions further include, prior to execution of the workflow by the software system, providing a second portion of the workflow form based on manual input provided during design-time, the user interface including the second portion.

The present disclosure also provides a computer-readable storage medium coupled to one or more processors and having instructions stored thereon which, when executed by the one or more processors, cause the one or more processors to perform operations in accordance with implementations of the methods provided herein.

The present disclosure further provides a system for implementing the methods provided herein. The system includes one or more processors, and a computer-readable storage medium coupled to the one or more processors having instructions stored thereon which, when executed by the one or more processors, cause the one or more processors to perform operations in accordance with implementations of the methods provided herein.

It is appreciated that methods in accordance with the present disclosure can include any combination of the aspects and features described herein. That is, methods in accordance with the present disclosure are not limited to the combinations of aspects and features specifically described herein, but also include any combination of the aspects and features provided.

The details of one or more implementations of the present disclosure are set forth in the accompanying drawings and the description below. Other features and advantages of the present disclosure will be apparent from the description and drawings, and from the claims.

### DESCRIPTION OF DRAWINGS

FIG. 1A depicts an example interface for manual modeling of workflow forms in traditional systems.
FIG. 1B depicts an example user interface (UI) provided based on an example workflow form depicted ion FIG. 1A.
FIG. 2 depicts an example architecture that can be used to execute implementations of the present disclosure.
FIG. 3 depicts in example workflow to illustrate implementations of the present disclosure.
FIGs. 4A and 4B depict an example of using an existing workflow form to provide another workflow form in accordance with implementations of the present disclosure.
FIG. 5 depicts an example process that can be executed in accordance with implementations of the present disclosure.
FIG. 6 is a schematic illustration of example computer systems that can be used to execute implementations of the present disclosure.

Like reference symbols in the various drawings indicate like elements.

### DETAILED DESCRIPTION

Implementations of the present disclosure are directed to an intelligent workflow forms platform for modeling workflow forms for execution of workflows in software systems. More particularly, and as described in further detail herein, the intelligent workflow forms platform of the present disclosure leverages an existing workflow model, which models an executing workflow, to provide at least a portion of a workflow form that is used during execution of the workflow. In some implementations, an existing workflow form is used to provide at least a portion of another workflow form, both workflow forms being used during execution of the workflow. In some implementations, data context is used to provide at least a portion of a workflow form, the data context being provided from a preceding task that is executed during execution of the workflow. Implementations can include actions of receiving, by a software system, a workflow model that defines a workflow executed by the software system, the workflow model provided as a computer-readable file prior to execution of the workflow and defining a control flow, during execution of the workflow by the software system, providing a first portion of a workflow form based on the control flow, the workflow form corresponding to a first activity of the workflow and the first portion including one or more interface elements enabling a user to provide user input to the software system during execution of the workflow to progress the workflow within the software system, displaying the workflow form to the user as a user interface including the first portion, and receiving, by the software system, user input that is provided through an interface element of the one or more interface elements of the first portion.

To provide further context for implementations of the present disclosure, and as introduced above, enterprises use software systems to conduct operations. Example software systems can include, without limitation, enterprise resource management (ERP) systems, customer relationship management (CRM) systems, human capital management (HCM) systems, and the like. In some software systems, processes that underly operations of an enterprise are programmatically defined to enable execution of the processes using the software systems. In some examples, processes can be defined in terms of workflows, where a workflow includes a series of linked activities (tasks) that are executed to achieve a goal. As described in further detail below, each process is modeled by a workflow model.

To enable user participation in software-based workflows, user interfaces (UIs) are provided using workflow forms (or forms). To achieve this, software applications are provided that enable UIs to be modeled for user tasks using workflow forms. For example, the SAP Cloud Platform provided by SAP SE of Walldorf, Germany includes a feature referred to as Workflow Forms, which provides an editor that enables forms to be modeled. For example, the forms can include SAP Fiori UIs, SAP Fiori also being provided by SAP SE of Walldorf, Germany. However, such modeling of forms requires manual effort and consumes computing resources (e.g., resources required to manually model the forms). For example, during design-time, each detail of the workflow form (also referred to herein as form) has to be pre-planned, modelled, and configured accordingly. This is a repetitive and tedious task for users and consumes computing resources.

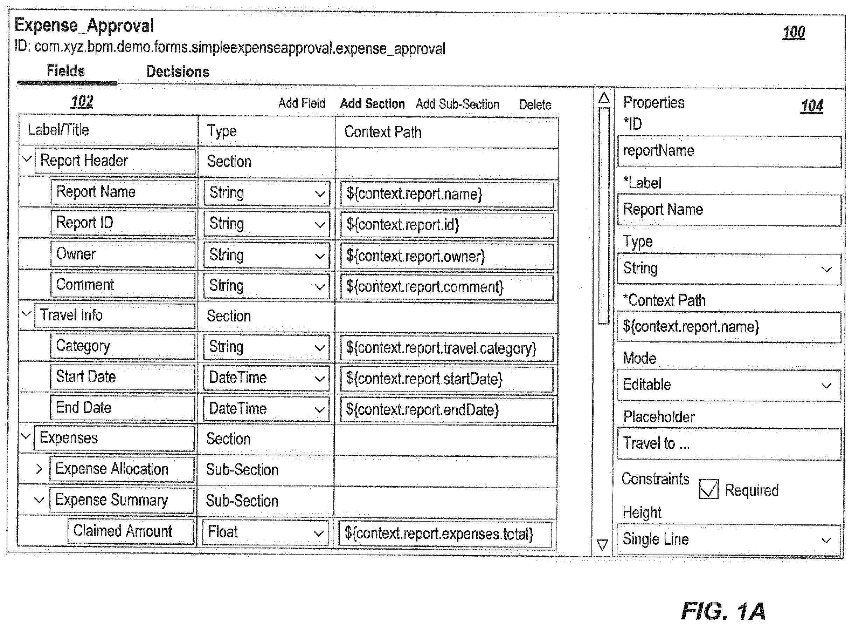

FIG. 1A depicts an example editor interface 100 that can be used to manually model a workflow form. Manual modeling of a workflow form can be referred to as static modeling. FIG. 1A depicts design-time modeling of an example form directed to expense reports. It is contemplated, however, that implementations of the present disclosure are applicable to forms directed to any appropriate subject matter.

The example editor interface 100 of FIG. 1A includes a first section 102 that can be used to model fields of the form, which can each include sections and sub-sections. The first section 102 can also be used to bind the fields to context data and select types for the fields. For each field, it is decided whether the field is read-only or editable. In the example of FIG. 1A, Report Header, Travel Info, Expenses, Expense Allocation, and Expense Summary are read-only, while Report Name, Report ID, Owner, Comment, Category, Start Date, End Date, and Claimed Amount are editable. Further, decisions (e.g. Approve or Reject) have to be modeled. The example editor interface 100 of FIG. 1A includes a second section 104 that can be used to define properties for the form.

In the example of FIG. 1A, a "Fields" option is selected, which displays the first section 102 that enables modeling of the fields (e.g., for data entry during run-time), sections, and sub-sections. However, a workflow often includes decisions that are also to be modeled. In the example of FIG. 1A, a "Decisions" option can be selected, which results in another section being displayed (not shown in FIG. 1A) that enables modeling of decisions that need be made during execution of the underlying workflow. Accordingly, the example editor interface 100 provides for static modeling of both fields and decisions during design-time.

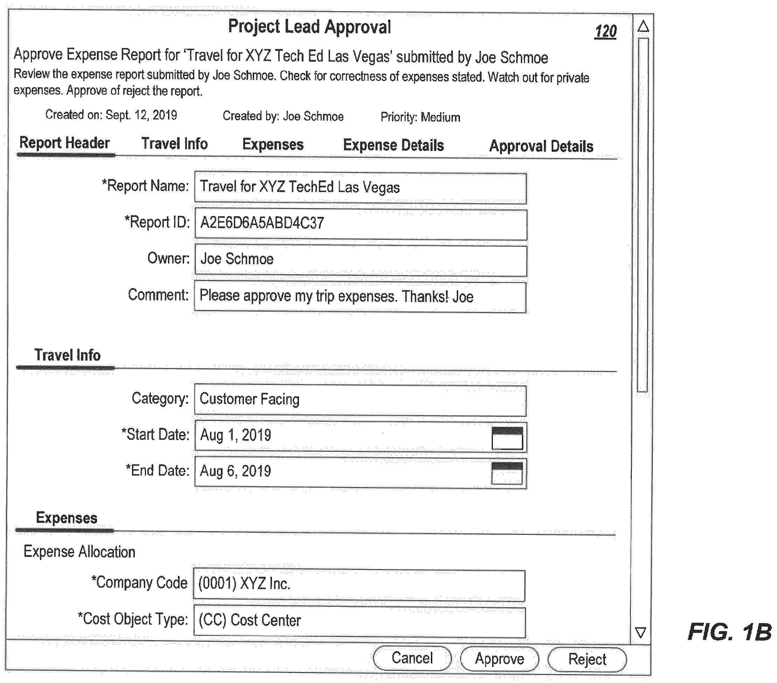

FIG. 1B depicts an example UI 120 that is provided at run-time based on the form modeled in the example of FIG. 1A. The example UI 120 depicts an example expense approval UI that would be presented to a user for approval of a described expense report. In the example of FIG. 1B, the example UI 120 includes an approval element (e.g., button) and a reject element (e.g., button) that the user can select to either approve or reject the expense report. In some examples, the user can select a cancel option.

As visually depicted in FIGs. 1A and 1B, traditional systems that provide workflow forms require manual effort in a repetitive and tedious task for users. That is, static modeling of both fields and decisions are performed during design-time. This is not only inefficient in terms of time, it is also inefficient in terms of technical resources. For example, programs that provide editor interfaces enabling modeling of both fields and decisions in workflow forms, such as the editor interface 100 of FIG. 1A need be written, tested, compiled, deployed and maintained, and, executed by computing resources during use (e.g., consuming processing power and memory, while a user edits workflow forms in the editor interface).

In view of the above context, implementations of the present disclosure provide an intelligent workflow forms platform for modeling workflow forms for execution of workflows in software systems. More particularly, and as described in further detail herein, the intelligent workflow forms platform of the present disclosure leverages an existing workflow model, which models an executing workflow, to provide at least a portion of a workflow form that is used during execution of the workflow. More particularly, and as described in further detail herein, the existing workflow model defines a control flow including decisions that are to be made during execution of the workflow. The control flow of the existing workflow model is used to provide at least a portion of a workflow form for execution of the workflow. For example, during execution of the workflow (i.e., run-time), one or more interface elements are automatically generated in the workflow form based on the control flow provided in the existing workflow model. This obviates the need for design-time modeling of the one or more interface elements.

In some implementations, the intelligent workflow forms platform uses an existing form to provide at least a portion of another workflow form, both workflow forms being used during execution of the workflow. For example, during execution of the workflow (i.e., run-time), a portion of a workflow form can be automatically generated and include read-only fields that display data entered through an existing workflow form (i.e., a workflow form used earlier in execution of the wokflow). In some implementations, the intelligent workflow forms platform uses data context to provide at least a portion of a workflow form for execution of the workflow. For example, during execution of the workflow (i.e., run-time), the data context is provided from a preceding task that is executed during execution of the workflow.

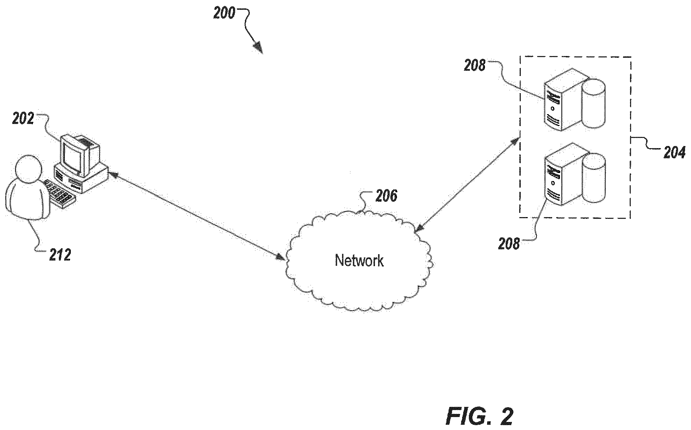

FIG. 2 depicts an example architecture 200 in accordance with implementations of the present disclosure. In the depicted example, the example architecture 200 includes a client device 202, a network 206, and a server system 204. The server system 204 includes one or more server devices and databases 208 (e.g., processors, memory). In the depicted example, a user 212 interacts with the client device 202.

In some examples, the client device 202 can communicate with the server system 204 over the network 206. In some examples, the client device 202 includes any appropriate type of computing device such as a desktop computer, a laptop computer, a handheld computer, a tablet computer, a personal digital assistant (PDA), a cellular telephone, a network appliance, a camera, a smart phone, an enhanced general packet radio service (EGPRS) mobile phone, a media player, a navigation device, an email device, a game console, or an appropriate combination of any two or more of these devices or other data processing devices. In some implementations, the network 206 can include a large computer network, such as a local area network (LAN), a wide area network (WAN), the Internet, a cellular network, a telephone network (e.g., PSTN) or an appropriate combination thereof connecting any number of communication devices, mobile computing devices, fixed computing devices and server systems.

In some implementations, the server system 204 includes at least one server and at least one data store. In the example of FIG. 2, the server system 204 is intended to represent various forms of servers including, but not limited to a web server, an application server, a proxy server, a network server, and/or a server pool. In general, server systems accept requests for application services and provides such services to any number of client devices (e.g., the client device 202 over the network 206).

In accordance with implementations of the present disclosure, and as noted above, the server system 204 can host an intelligent workflow form platform that dynamically provides at least a portion of a workflow form during execution of an underlying workflow. As described in further detail herein, the intelligent workflow form platform enables more efficient modeling of workflow forms for execution of workflows in software systems. In some implementations, the intelligent workflow forms platform uses a control flow defined within an existing workflow model of the executing workflow to provide at least a portion of a workflow form used during execution of the workflow. In some implementations, the intelligent workflow forms platform uses an existing form to provide at least a portion of another workflow form, both workflow forms being used during execution of the workflow. In some implementations, the intelligent workflow forms platform uses data context to provide at least a portion of a workflow form, the data context being provided from a preceding task that is executed during execution of the workflow. In some examples, at least a portion of the workflow form is provided dynamically during run-time of the workflow.

Implementations of the present disclosure are described in further detail with reference to an example workflow that includes expense processing (e.g., entering expenses, approving/rejecting expenses). It is contemplated, however, that implementations of the present disclosure can be realized with any appropriate workflow.

As introduced above, a workflow can be described as a series of linked activities (tasks) that are executed to achieve a goal. More particularly, a workflow can include one or more tasks that are performed automatically (e.g., by software), one or more tasks that are performed manually (e.g., by a user), one or more documents (e.g., an expense report) that are generated by, handled by, or transmitted between tasks, and/or one or more decisions (e.g., accept, rejection). In general, a workflow includes creating, deleting, and/or editing of data that is recorded in one or more electronic documents (e.g., expense report provided as a computer-readable electronic document). In the example workflow introduced above, a task can include generating an expense report (e.g., by a user submitting the expense report), and a task can include approving or rejecting an expense report (e.g., by a user tasked with reviewing expense reports).

In some implementations, workflows are programmatically modeled for execution by a software system. For example, a workflow can be modeled using the business process model and notation (BPMN). It is contemplated, however, that implementations of the present disclosure can be realized using any appropriate workflow modeling technique. BPMN can be described as a standardized graphical notation that is used for process modeling. That is, using BPMN, a workflow model is graphically defined by, for example, adding and linking visual components. In this manner, a human user can visually define the workflow model for an underlying workflow. Further, computer-readable code is generated based on the graphical workflow model. In some examples, the computer-readable code programmatically defines components of the workflow model, characteristics of components, and relationships between components (e.g., the output of one component is the input to another component). In this manner, during run-time, a software system can execute the workflow by executing the computer-readable code.

A BPMN model of a workflow (e.g., workflow model) contains information about the start and end of the workflow, defines the tasks that have to be executed and in which order in between the start and the end, and defines what has to happen if a certain decision is made by involved users or a system executing the workflow. The workflow model also includes a control flow. In some examples, the control flow represents decisions within the workflow that affect progression through the workflow. Among other elements, BPMN includes flow objects that define the behavior of a process that is being modeled. Example flow objects include events that describe occurrences during the process (e.g., start event, intermediate event, boundary event, end event), activities (i.e., tasks) that are performed during the process, and gateways (e.g., decision points) that determine the sequence flow path in the process (e.g., the control flow).

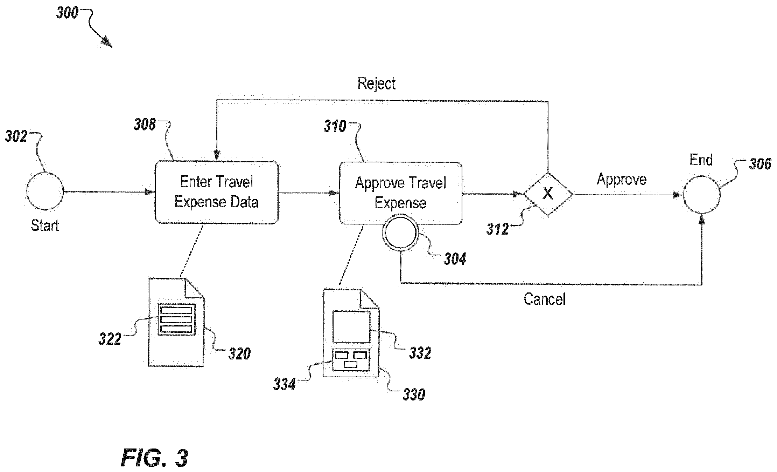

FIG. 3 depicts an example workflow model 300 in accordance with implementations of the present disclosure. The example workflow model 300 is provided using BPMN and models the example workflow of approval of expenses. In the example of FIG. 3, the example workflow model 300 includes events 302, 304, 306 (e.g., start event, boundary event, end event, respectively), activities 308, 310, and a gateway 312. In the example of FIG. 3, the workflow includes a control flow that includes a one-step approval represented by the gateway 312 (e.g., an exclusive choice gateway). In general, the control flow represents one or more decisions that are to be made during execution of the workflow. In the example of FIG. 3, decisions can include a cancel decision within the activity 310, as represented by the boundary event 304, and an approve or reject decision represented by the gateway 312.

Accordingly, prior to execution of a workflow within a software system, a workflow model is defined, which models the to-be-executed workflow, and is stored in computer-readable memory. Consequently, the workflow model can be referred to as an existing workflow model, a pre-existing workflow model, and/or a predefined workflow model. However, to facilitate execution of the workflow, and as introduced above, one or more workflow forms need to be provided. For example, a workflow form is used to provide a UI, through which a user can perform one or more tasks (e.g., input data, make a decision) to progress execution of the workflow.

In accordance with implementations of the present disclosure, an existing workflow model can be used to automatically generate at least a portion of workflow form that enables execution of the workflow. In some examples, the portion of the workflow form is provided during run-time of the workflow that is modeled by the existing workflow model (i.e., while the workflow is being executed in the software system). More particularly, the intelligent workflow platform of the present disclosure references a control flow defined within the workflow model (e.g., BPMN model). For example, if a user task is directly followed by a gateway, decisions to be included in the workflow form can be derived from the outgoing sequence flow of the gateway. For example, and with reference to the example workflow model 300 of FIG. 3, the intelligent workflow form of the user task "Approve Travel Expenses" (i.e., the activity 310) can automatically include a decision with two options, approve and reject, as defined in the example workflow model 300. In this manner, interface elements for the decision can be automatically generated in the workflow form without a user having to define the decision within the workflow form during a design-time.

In accordance with implementations of the present disclosure, modeling of a workflow form can include both static modeling and dynamic modeling. Static-modeling is performed during design-time using an editor (e.g., as described above with reference to FIG. 1A). For example, static modeling of a workflow form includes defining fields, sections, and sub-sections of the workflow form during design-time. In contrast, dynamic modeling is performed during run-time by the software system, within which the workflow is executed. In some implementations, dynamic modeling is performed based on a control flow defined in the workflow model (e.g., BPMN model) of the executing workflow.

In some implementations, dynamic modeling automatically provides interface elements within the workflow form based on control flow constructs of the underlying workflow model. Example control flow constructs that can be leveraged for dynamic modeling can include, without limitation, decisions and events. For example, in response to a decision construct (e.g., an exclusive or), a decision interface for the workflow form can be automatically generated based on the data associated with the decision construct within the workflow model. As another example, in response to an event construct, a decision interface for the workflow form can be automatically generated based on the data associated with the event construct within the workflow model.

Implementations of the present disclosure are described in further detail with reference to the example workflow for expense processing and the example workflow model 300 of FIG. 3. It is contemplated, however, that implementations of the present disclosure can be realized with any appropriate workflow and workflow model.

In the example of FIG. 3, and as discussed above, the workflow model 300 includes the activities 308, 310, and the gateway 312. In this example, the activity 308 is directed to user entry of expense-related data. The output of the activity 308 is provided to the activity 310, which is directed to approval/rejection of the expenses submitted from the activity 308. The activity 310 is also associated with the intermediate event 304, which enables a user to cancel the workflow.

For the activity 308, a first workflow form 320 is to be provided that enables a user (e.g., employee submitting an expense form) to enter the expense-related data during run-time (i.e., during execution of the workflow by a software system). The first workflow form 320 can be modeled as described above with reference to FIG. 1A. That is, the first workflow form 320 can be statically modeled during design-time to include fields 322 for entering data during run-time. In this example, the activity 308 is not related to any control flow constructs that can be leveraged to provide for dynamic modeling during run-time.

For the activity 310, a second workflow form 330 is to be provided that enables a user (e.g., employee approving/rejecting expenses) to review expense-related data and make a decision on the data during run-time (i.e., during execution of the workflow by a software system). In some implementations, a portion of the second workflow form 330 can be statically modeled during design-time, and a portion of the second workflow form 330 can be dynamically modeled during run-time. For example, a first portion 332 of the second workflow form 330 can be statically modeled during design-time to include fields that display data (e.g., data entered through the first workflow form 320) during run-time. During run-time, a second portion 334 of the second workflow form 330 can be dynamically modeled during run-time to include interface elements that the user can select to make a decision.

In this example, the activity 310 is related to control flow constructs that are leveraged to provide for the dynamic modeling during run-time. In the depicted example, the activity 310 is related to the intermediate event 304 that provides the user the option of canceling the workflow, and is related to the gateway 312 that enable the user to decide whether to accept or reject the expense report. In response to determining that the activity 310 is related to control flow constructs that are defined in the workflow model 300, the software system automatically generates the second portion 334 of the second workflow form 330 during run-time. In some examples, determining that an activity is associated with control flow constructs includes identifying such associations within the computer-executable code of the underlying workflow.

In this example, the second portion 334 is dynamically modeled during run-time. That is, prior to run-time, the second portion 334 is not present in the second workflow form 330. By referencing the existing workflow model 300 during execution of the workflow (i.e., at run-time), the second portion 334 is generated to include, in this example, an interface element for accepting the expenses (e.g., accept button), an interface element for rejecting the expenses (e.g., reject button), and an interface element for canceling the workflow (e.g., cancel button). In this manner, static modeling of the second portion 334 is avoided during design-time, as the second portion 334 is automatically generated based on the control flow defined in the existing workflow model 300 at run-time.

As introduced above, implementations of the present disclosure can also use an existing workflow form to provide at least a portion of another workflow form for execution of the underlying workflow. That is, both the existing workflow form and the other workflow form are used during execution of the workflow. In some implementations, it can be determined that the output of an activity is provided as at least a portion of the input to another (downstream) activity. For example, this can be determined by the software system during run-time from the computer-executable code of the underlying workflow. In response, at least a portion of a workflow form of the downstream activity can be dynamically modeled to include the input (or portion of the input). Accordingly, a workflow form already existing in the workflow can be used to at least partially dynamically model another, downstream workflow form in the workflow.

For example, and with continued reference to FIG. 3, in the expense processing workflow, the activity 308 is directed to inputting expense-related data and the activity 310 is directed to reviewing the expense-related data and making a decision. In some examples, one difference between the activity 308 and the activity 310 is that the activity 308 is editable (e.g., requiring user input of data) and the activity 310 is read-only. That is, and in this example, in the activity 310, the user can only review the data that was submitted in the activity 308, but cannot edit the data. Instead, the user in the activity 310 can only make a decision (e.g., approve, reject, cancel).

As discussed above, for the activity 310, the second workflow form 330 is to be provided that enables a user (e.g., employee approving/rejecting expenses) to review expense-related data and make a decision on the data during run-time (i.e., during execution of the workflow by a software system). In some implementations, no portions of the second workflow form 330 need to be statically modeled during design-time. That is, the second workflow form 330 need not even exist prior to run-time (i.e., execution of the workflow). Instead, an entirety of the second workflow form 330 can be dynamically modeled during run-time. For example, the first portion 332 of the second workflow form 330 can be dynamically modeled during run-time to include read-only fields that display data (e.g., data entered through the first workflow form 320). That is, the fields 322 of the first workflow form 320 are used to define the first portion 332 of the second workflow form at run-time. Also, during run-time, the second portion 334 of the second workflow form 330 can be dynamically modeled to include interface elements that the user can select to make a decision, as described above. Accordingly, prior to run-time, neither the first portion 332 nor the second portion 334 is present in the second workflow form 330. In this manner, static modeling of both the first portion 332 and the second portion 334 is avoided during design-time.

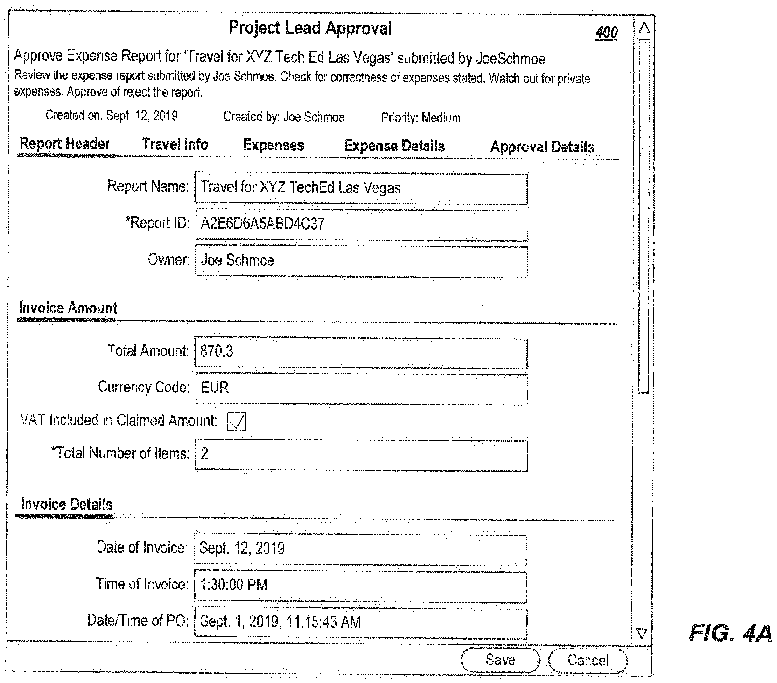

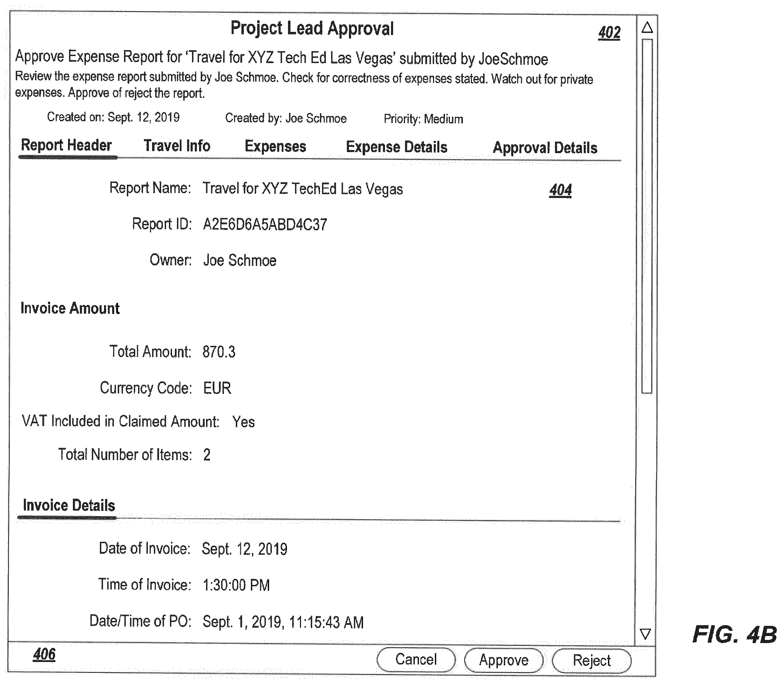

FIGs. 4A and 4B depict an example of using an existing workflow form to provide another workflow form in accordance with implementations of the present disclosure. For example, FIG. 4A depicts an example workflow form 400 that is displayed to a user during run-time to enable the user to input expense-related data (e.g., the activity 308 of FIG. 3). Accordingly, the workflow form 400 is editable. FIG. 4B depicts an example workflow form 402 having a first portion 404 and a second portion 406 that are displayed to a user during run-time to enable the user to review the previously input expense-related data (e.g., the activity 310 of FIG. 3). In accordance with implementations of the present disclosure, the first portion 404 is dynamically provided at run-time based on the workflow form 400. That is, the first portion 404 is provided as a read-only copy of the data entered into the workflow form 400. Further, the second portion 406 is dynamically provided at run-time based on the control flow constructs defined in the underlying workflow model, as described above.

Implementations of the present disclosure can also use data context to dynamically model a workflow form during run-time. More particularly, and as described herein, content of a workflow form (e.g., sections, sub-sections, fields, decisions) can be static content that is modelled by a user at design-time. In some implementations, such content can be dynamically provisioned at runtime.

In further detail, each existing workflow model defines a control flow, as described herein, and accounts for data that is created and passed from one activity to another activity (e.g., expense data passed from the activity 308 to the activity 310). In some activities, the data is used as the basis for one or more decisions (e.g., in the activity 310 of FIG. 3). The data includes a data context, which can be described in terms of a property and a value pair (e.g., [P, v]). During run-time, the software system can use the data context to dynamically render portions of a workflow form. That is, instead of modeling a layout of the workflow form in advance, the workflow form can be provisioned at run-time at least partially based on the data context received from an upstream task (e.g., a data context received by the activity 310 from the activity 308 in FIG. 3).

Continuing with the above examples, data passed from the activity 308 to the activity 310 can include the following example data context:

```
    {
      "Report": {
         "Report Name": "Travel for XYZ TechEd Las Vegas",
         "Report ID": "A2E6D6A5ABD4C37",
         "Owner": "Joe Schmoe",
      }
      "Invoice Amount": {
         "Total Claimed Amount": 870.30,
         "Currency Code": "EUR",
         "VAT Included": true,
         "Total Number of Items": 2,
         "Invoice Details": {
           "Date of Invoice": "2019-09-12",
           "Time of Invoice": "13:30:00",
           "Date/Time of PO": "2019-09-01T11:15:43.000Z",
         "Category": "Internal",
         "ID": 7,
         "Date of first invoiced item": ""
         }
      }
   }
```

### Listing 1: Example Data Context

In accordance with implementations of the present disclosure, during run-time, the software system can parse the data context to identify sections, sub-sections, fields and data values, and dynamically generate one or more portions of a workflow form. With reference to the example of Listing 1 above, the software system can parse the data context to provide a section for Report Header that includes fields of Report Name, Report ID, and Owner, and to provide a section for Invoice Amount that includes fields of Total Claimed Amount, Currency Code, VAT Included in Claimed Amount, Total Number of Items, and a sub-section for Invoice Details that includes fields of Date of Invoice, Time of Invoice, and Date/Time of PO, among other data context.

The parsed data context and corresponding values can be used to dynamically provide the workflow form at run-time. For example, and with reference to FIG. 4B, the example data context of Listing 1 can be used to generate the workflow form 400 with the first portion 404 as a read-only copy of the data described in the data context. Further, the second portion 406 is dynamically provided as run-time based on the control flow constructs defined in the existing workflow model, as described above.

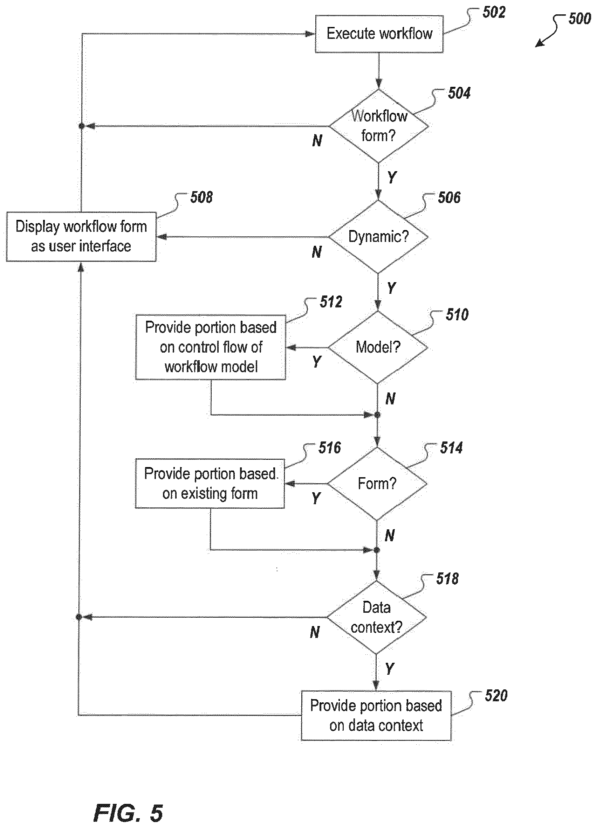

FIG. 5 depicts an example process 500 that can be executed in accordance with implementations of the present disclosure. In some examples, the example process 500 is provided using one or more computer-executable programs executed by one or more computing devices.

A workflow is executed (502). For example, a software system (e.g., an ERP system) executes a workflow that is defined by a workflow model (e.g., BPMN model). It is determined whether a workflow form is to be displayed (504). For example, it can be determined that an activity defined in the workflow model is to be performed by a user (e.g., input expense data; review expense data), and that a workflow form that enables the user to interact with the software system is to be displayed. In some examples, the workflow form can be associated with the activity in the workflow model (e.g., as depicted in FIG. 3). If a workflow form is not to be displayed, the example process 500 loops back to continue execution of the workflow.

If a workflow form is to be displayed, it is determined whether a portion of the workflow form is to be dynamically generated (506). For example, a workflow form associated with the activity can include metadata indicating that at least a portion of the workflow form is to be dynamically generated. In some examples, the metadata can indicate a source for the dynamic generation (e.g., control flow, existing form, data context). If no portion of the workflow form is to be dynamically generated, a workflow form is displayed as a UI (508). For example, the workflow form is displayed and only includes content that was statically modeled during a design-time before execution of the workflow.

If a portion of the workflow form is to be dynamically generated, it is determined whether a portion is to be dynamically generated based on an existing model (510). That is, it is determined whether a portion of the workflow form is to be generated based on a control flow defined within the workflow model of the workflow that is being executed. For example, the metadata can be referenced to determine whether a portion is to be dynamically generated based on a control flow defined in a workflow model that defines the workflow being executed. If a portion is to be dynamically generated based on a control flow, at least one portion of the workflow form is provided based on a control flow of a workflow model (512). For example, and as described above, in response to a decision construct (e.g., an exclusive or), one or more interface elements (e.g., reject, approve, cancel) for the workflow form can be automatically generated based on the data associated with the decision construct within the workflow model. As another example, in response to an event construct, a decision interface for the workflow form can be automatically generated based on the data associated with the event construct within the workflow model.

It is determined whether a portion is to be dynamically generated based on a workflow flow form (514). For example, the metadata can be referenced to determine whether a portion is to be dynamically generated based on an existing workflow form provided for execution of the workflow. If a portion is to be dynamically generated based on a workflow flow form, at least one portion of the workflow form is provided based on a workflow flow form (516). For example, and as described above, it can be determined that the output of an activity is provided as at least a portion of the input to another (downstream) activity, and in response, at least a portion of a workflow form of the downstream activity can be dynamically modeled to include the input (or portion of the input).

It is determined whether a portion is to be dynamically generated based on a data context (518). For example, the metadata can be referenced to determine whether a portion is to be dynamically generated based on data context provided from performance of an activity during execution of the workflow. If a portion is to be dynamically generated based on a data context, at least one portion of the workflow form is provided based on a data context (518), and the example process 500 loops back to display a workflow form as a UI (508). For example, and as described above, the software system can parse the data context to identify sections, sub-sections, fields and data values, and dynamically generate one or more portions of a workflow form.

If a portion is not to be dynamically generated based on a data context, the example process 500 loops back to display a workflow form as a UI (508). For example, the workflow form is displayed and includes content that was dynamically modeled during a run-time (i.e., during execution of the workflow). In some examples, the workflow form also includes content that was statically modeled during a design-time before execution of the workflow.

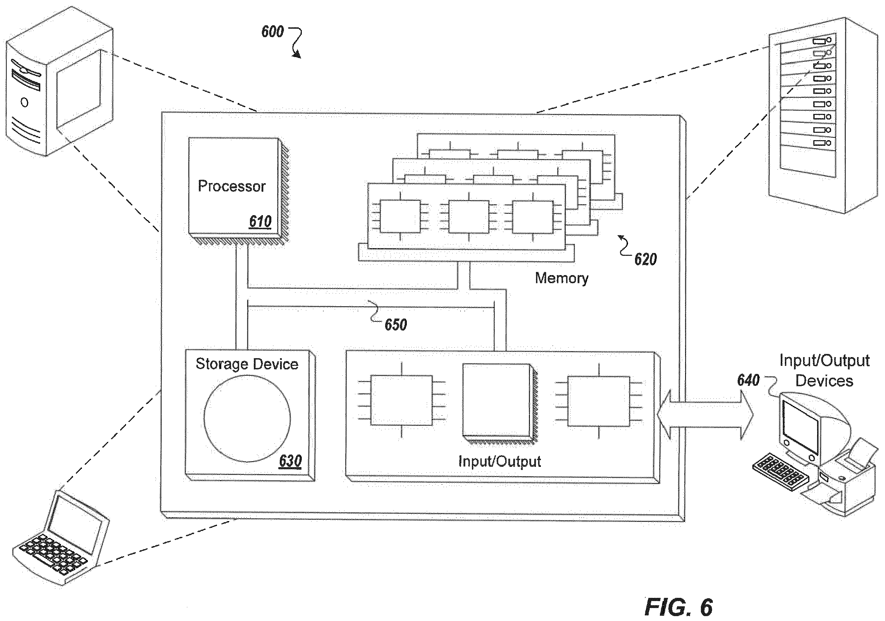

Referring now to FIG. 6, a schematic diagram of an example computing system 600 is provided. The system 600 can be used for the operations described in association with the implementations described herein. For example, the system 600 may be included in any or all of the server components discussed herein. The system 600 includes a processor 610, a memory 620, a storage device 630, and an input/output device 640. The components 610, 620, 630, 640 are interconnected using a system bus 650. The processor 610 is capable of processing instructions for execution within the system 600. In some implementations, the processor 610 is a single-threaded processor. In some implementations, the processor 610 is a multi-threaded processor. The processor 610 is capable of processing instructions stored in the memory 620 or on the storage device 630 to display graphical information for a user interface on the input/output device 640.

The memory 620 stores information within the system 600. In some implementations, the memory 620 is a computer-readable medium. In some implementations, the memory 620 is a volatile memory unit. In some implementations, the memory 620 is a non-volatile memory unit. The storage device 630 is capable of providing mass storage for the system 600. In some implementations, the storage device 630 is a computer-readable medium. In some implementations, the storage device 630 may be a floppy disk device, a hard disk device, an optical disk device, or a tape device. The input/output device 640 provides input/output operations for the system 600. In some implementations, the input/output device 640 includes a keyboard and/or pointing device. In some implementations, the input/output device 640 includes a display unit for displaying graphical user interfaces.

The features described can be implemented in digital electronic circuitry, or in computer hardware, firmware, software, or in combinations of them. The apparatus can be implemented in a computer program product tangibly embodied in an information carrier (e.g., in a machine-readable storage device, for execution by a programmable processor), and method steps can be performed by a programmable processor executing a program of instructions to perform functions of the described implementations by operating on input data and generating output. The described features can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language, including compiled or interpreted languages, and it can be deployed in any form, including as a stand-alone program or as a module, component, subroutine, or other unit suitable for use in a computing environment.

Suitable processors for the execution of a program of instructions include, by way of example, both general and special purpose microprocessors, and the sole processor or one of multiple processors of any kind of computer. Generally, a processor will receive instructions and data from a read-only memory or a random access memory or both. Elements of a computer can include a processor for executing instructions and one or more memories for storing instructions and data. Generally, a computer can also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

To provide for interaction with a user, the features can be implemented on a computer having a display device such as a CRT (cathode ray tube) or LCD (liquid crystal display) monitor for displaying information to the user and a keyboard and a pointing device such as a mouse or a trackball by which the user can provide input to the computer.

The features can be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system can be connected by any form or medium of digital data communication such as a communication network. Examples of communication networks include, for example, a LAN, a WAN, and the computers and networks forming the Internet.

The computer system can include clients and servers. A client and server are generally remote from each other and typically interact through a network, such as the described one. The relationship of client and server arises by virtue of computer programs running on the respective computers and having a client-server relationship to each other.

In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other implementations are within the scope of the following claims.

A number of implementations of the present disclosure have been described. Nevertheless, it will be understood that various modifications may be made without departing from the spirit and scope of the present disclosure. Accordingly, other implementations are within the scope of the following claims.

In view of the above, the present application discloses aspects and/or embodiments as described in the following itemized list:
1. A computer-implemented method for providing at least a portion of a workflow form during run-time of a workflow by a software system, the method being executed by one or more processors and comprising:
   receiving, by the software system, a workflow model that defines a workflow executed by the software system, the workflow model provided as a computer-readable file prior to execution of the workflow and comprising a control flow;
   during execution of the workflow by the software system, providing a first portion of a workflow form based on the control flow, the workflow form corresponding to a first activity of the workflow and the first portion comprising one or more interface elements enabling a user to provide user input to the software system during execution of the workflow to progress the workflow within the software system;
   displaying the workflow form to the user as a user interface comprising the first portion; and
   receiving, by the software system, user input that is provided through an interface element of the one or more interface elements of the first portion.
2. The method of item 1, wherein the control flow defines one or more decisions executable by the user during execution of the workflow.
3. The method of any one of the preceding items, wherein each of the one or more interface elements is selectable by the user to execute a decision defined within the workflow model for progressing the workflow within the software system.
4. The method of any one of the preceding items, further comprising during execution of the workflow by the software system, providing a second portion of the workflow form based on a data context provided from execution of a second activity of the workflow, the user interface comprising the second portion.
5. The method of any one of the preceding items, wherein the data context comprises property and value pairs input to a previous workflow form during performance of the second activity.
6. The method of any one of the preceding items, further comprising during execution of the workflow by the software system, providing a second portion of the workflow form based on a previous workflow form provided for a second activity of the workflow, the user interface comprising the second portion.
7. The method of any one of the preceding items, further comprising, prior to execution of the workflow by the software system, providing a second portion of the workflow form based on manual input provided during design-time, the user interface comprising the second portion.
8. A non-transitory computer-readable storage medium coupled to one or more processors and having instructions stored thereon which, when executed by the one or more processors, cause the one or more processors to perform operations for providing at least a portion of a workflow form during run-time of a workflow by a software system, the operations comprising:
   receiving, by the software system, a workflow model that defines a workflow executed by the software system, the workflow model provided as a computer-readable file prior to execution of the workflow and comprising a control flow;
   during execution of the workflow by the software system, providing a first portion of a workflow form based on the control flow, the workflow form corresponding to a first activity of the workflow and the first portion comprising one or more interface elements enabling a user to provide user input to the software system during execution of the workflow to progress the workflow within the software system;
   displaying the workflow form to the user as a user interface comprising the first portion; and
   receiving, by the software system, user input that is provided through an interface element of the one or more interface elements of the first portion.
9. The computer-readable storage medium of item 8, wherein the control flow defines one or more decisions executable by the user during execution of the workflow.
10. The computer-readable storage medium of any one of items 8 or 9, wherein each of the one or more interface elements is selectable by the user to execute a decision defined within the workflow model for progressing the workflow within the software system.
11. The computer-readable storage medium of any one of items 8-10, wherein operations further comprise, during execution of the workflow by the software system, providing a second portion of the workflow form based on a data context provided from execution of a second activity of the workflow, the user interface comprising the second portion.
12. The computer-readable storage medium of any one of items 8-11, wherein the data context comprises property and value pairs input to a previous workflow form during performance of the second activity.
13. The computer-readable storage medium of any one of items 8-12, wherein operations further comprise during execution of the workflow by the software system, providing a second portion of the workflow form based on a previous workflow form provided for a second activity of the workflow, the user interface comprising the second portion.
14. The computer-readable storage medium of any one of items 8-13, wherein operations further comprise, prior to execution of the workflow by the software system, providing a second portion of the workflow form based on manual input provided during design-time, the user interface comprising the second portion.
15. A system, comprising:
   a computing device; and
   a computer-readable storage device coupled to the computing device and having instructions stored thereon which, when executed by the computing device, cause the computing device to perform operations for natural language explanations for providing at least a portion of a workflow form during run-time of a workflow by a software system, the operations comprising:
      receiving, by the software system, a workflow model that defines a workflow executed by the software system, the workflow model provided as a computer-readable file prior to execution of the workflow and comprising a control flow;
      during execution of the workflow by the software system, providing a first portion of a workflow form based on the control flow, the workflow form corresponding to a first activity of the workflow and the first portion comprising one or more interface elements enabling a user to provide user input to the software system during execution of the workflow to progress the workflow within the software system;
      displaying the workflow form to the user as a user interface comprising the first portion; and
      receiving, by the software system, user input that is provided through an interface element of the one or more interface elements of the first portion.
16. The system of item 15, wherein the control flow defines one or more decisions executable by the user during execution of the workflow.
17. The system of any one of items 15 or 16, wherein each of the one or more interface elements is selectable by the user to execute a decision defined within the workflow model for progressing the workflow within the software system.
18. The system of any one of items 15-17, wherein operations further comprise, during execution of the workflow by the software system, providing a second portion of the workflow form based on a data context provided from execution of a second activity of the workflow, the user interface comprising the second portion.
19. The system of any one of items 15-18, wherein the data context comprises property and value pairs input to a previous workflow form during performance of the second activity.
20. The system of any one of items 15-19, wherein operations further comprise during execution of the workflow by the software system, providing a second portion of the workflow form based on a previous workflow form provided for a second activity of the workflow, the user interface comprising the second portion.

## Claims

1. A computer-implemented method for providing at least a portion of a workflow form during run-time of a workflow by a software system, the method being executed by one or more processors and comprising:
receiving, by the software system, a workflow model that defines a workflow executed by the software system, the workflow model provided as a computer-readable file prior to execution of the workflow and comprising a control flow;
during execution of the workflow by the software system, providing a first portion of a workflow form based on the control flow, the workflow form corresponding to a first activity of the workflow and the first portion comprising one or more interface elements enabling a user to provide user input to the software system during execution of the workflow to progress the workflow within the software system;
displaying the workflow form to.the user as a user interface comprising the first portion; and
receiving, by the software system, user input that is provided through an interface element of the one or more interface elements of the first portion.

2. The method of claim 1, wherein the control flow defines one or more decisions executable by the user during execution of the workflow, and/or wherein each of the one or more interface elements is selectable by the user to execute a decision defined within the workflow model for progressing the workflow within the software system.

3. The method of any one of the preceding claims, further comprising during execution of the workflow by the software system, providing a second portion of the workflow form based on a data context provided from execution of a second activity of the workflow, the user interface comprising the second portion, wherein, preferably, the data context comprises property and value pairs input to a previous workflow form during performance of the second activity.

4. The method of any one of the preceding claims, further comprising during execution of the workflow by the software system, providing a second portion of the workflow form based on a previous workflow form provided for a second activity of the workflow, the user interface comprising the second portion.

5. The method of any one of the preceding claims, further comprising, prior to execution of the workflow by the software system, providing a second portion of the workflow form based on manual input provided during design-time, the user interface comprising the second portion.

6. A non-transitory computer-readable storage medium coupled to one or more processors and having instructions stored thereon which, when executed by the one or more processors, cause the one or more processors to perform operations for providing at least a portion of a workflow form during run-time of a workflow by a software system, the operations comprising:
receiving, by the software system, a workflow model that defines a workflow executed by the software system, the workflow model provided as a computer-readable file prior to execution of the workflow and comprising a control flow;
during execution of the workflow by the software system, providing a first portion of a workflow form based on the control flow, the workflow form corresponding to a first activity of the workflow and the first portion comprising one or more interface elements enabling a user to provide user input to the software system during execution of the workflow to progress the workflow within the software system;
displaying the workflow form to the user as a user interface comprising the first portion; and
receiving, by the software system, user input that is provided through an interface element of the one or more interface elements of the first portion.

7. The computer-readable storage medium of claim 6, wherein the control flow defines one or more decisions executable by the user during execution of the workflow.

8. The computer-readable storage medium of any one of claims 6 or 7, wherein each of the one or more interface elements is selectable by the user to execute a decision defined within the workflow model for progressing the workflow within the software system.

9. The computer-readable storage medium of any one of claims 6-8, wherein operations further comprise, during execution of the workflow by the software system, providing a second portion of the workflow form based on a data context provided from execution of a second activity of the workflow, the user interface comprising the second portion, wherein, preferably, the data context comprises property and value pairs input to a previous workflow form during performance of the second activity.

10. The computer-readable storage medium of any one of claims 6-9, wherein operations further comprise during execution of the workflow by the software system, providing a second portion of the workflow form based on a previous workflow form provided for a second activity of the workflow, the user interface comprising the second portion.

11. The computer-readable storage medium of any one of claims 6-10, wherein operations further comprise, prior to execution of the workflow by the software system, providing a second portion of the workflow form based on manual input provided during design-time, the user interface comprising the second portion.

12. A system, comprising:
a computing device; and
a computer-readable storage device coupled to the computing device and having instructions stored thereon which, when executed by the computing device, cause the computing device to perform operations for natural language explanations for providing at least a portion of a workflow form during run-time of a workflow by a software system, the operations comprising:
receiving, by the software system, a workflow model that defines a workflow executed by the software system, the workflow model provided as a computer-readable file prior to execution of the workflow and comprising a control flow;
during execution of the workflow by the software system, providing a first portion of a workflow form based on the control flow, the workflow form corresponding to a first activity of the workflow and the first portion comprising one or more interface elements enabling a user to provide user input to the software system during execution of the workflow to progress the workflow within the software system;
displaying the workflow form to the user as a user interface comprising the first portion; and
receiving, by the software system, user input that is provided through an interface element of the one or more interface elements of the first portion.

13. The system of claim 12, wherein the control flow defines one or more decisions executable by the user during execution of the workflow, and/or wherein each of the one or more interface elements is selectable by the user to execute a decision defined within the workflow model for progressing the workflow within the software system.

14. The system of any one of claims 12 or 13, wherein operations further comprise, during execution of the workflow by the software system, providing a second portion of the workflow form based on a data context provided from execution of a second activity of the workflow, the user interface comprising the second portion, wherein, preferably, the data context comprises property and value pairs input to a previous workflow form during performance of the second activity.

15. The system of any one of claims 12-14, wherein operations further comprise during execution of the workflow by the software system, providing a second portion of the workflow form based on a previous workflow form provided for a second activity of the workflow, the user interface comprising the second portion.
